Europäisches Patentamt

European Patent Office

Office européen des brevets

(11) Numéro de publication: **0 349 511**
**A2**

(12) **DEMANDE DE BREVET EUROPEEN**

(21) Numéro de dépôt: **89870089.3**

(22) Date de dépôt: **12.06.89**

(51) Int. Cl.⁵: **G 12 B 15/04**

(30) Priorité: **29.06.88 BE 8800754**

(43) Date de publication de la demande:
**03.01.90 Bulletin 90/01**

(84) Etats contractants désignés:
**AT BE DE ES FR GB IT NL**

(71) Demandeur: **CENTRE DE RECHERCHES METALLURGIQUES CENTRUM VOOR RESEARCH IN DE METALLURGIE Association sans but lucratif Vereniging zonder winstoogmerk Rue Montoyer, 47 B-1040 Bruxelles (BE)**

(72) Inventeur: **Bragard, Adolphe
76, Chemin des Crêtes
B-4050 Esneux (BE)**

(74) Mandataire: **Lacasse, Lucien Emile et al
CENTRE DE RECHERCHES METALLURGIQUES Abbaye du Val-Benoît 11, rue Ernest Solvay
B-4000 Liège (BE)**

(54) **Procédé pour refroidir un ensemble optique.**

(57) Pour refroidir un ensemble optique composé d'une lentille et d'au moins une lame transparente optiquement inactive, on fait circuler un gaz de refroidissement d'une part entre la lentille et la lame et d'autre part sur la face extérieure de la lame. On utilise à cet effet un gaz (air, $N_2$, He, Ar) à une température inférieure à l'ambiante, de préférence comprise entre $+ 20 \,°C$ et $- 80 \,°C$. On refroidit l'ensemble optique afin de l'amener à une température d'équilibre, avant d'y envoyer le faisceau énergétique, par exemple le faisceau laser; on évite ainsi l'instabilité due au gonflement de la lentille.

EP 0 349 511 A2

## Description

### Procédé pour refroidir un ensemble optique

La présente invention concerne un procédé pour refroidir un ensemble optique comprenant au moins deux éléments tels qu'une lentille et une lame transparente. Ce procédé s'applique notamment au refroidissement d'un ensemble optique exposé à un faisceau énergétique de puissance élevée, tel qu'un faisceau laser.

Dans certaines applications telles que le traitement superficiel de cylindres de laminoir, on utilise des lasers dont la puissance peut atteindre plusieurs kilowatts. Un ensemble optique exposé à un tel faisceau énergétique subit donc un échauffement qui peut entraîner des déformations indésirables de la lentille; il en résulte divers inconvénients touchant la régularité du faisceau transmis, en particulier la position du point de focalisation.

On connaît déjà, par le brevet BE-A-900.852, un procédé de refroidissement d'un ensemble optique du type précité, dans lequel on fait circuler un courant de gaz sur au moins une des faces de la lentille, entre ladite face et une lame transparente optiquement inactive. Dans le cas où l'on n'emploie qu'une seule lame transparente, celle-ci est le plus souvent située entre la lentille et le point de focalisation.

L'utilisation de ce procédé connu de refroidissement de la lentille a permis, avec un faisceau laser au $CO_2$ de 17 mm de diamètre à son arrivée sur la lentille, d'augmenter la puissance du faisceau de 1,5 kW à 2 kW sans provoquer de gonflement de la lentille entraînant une modification significative du point de focalisation. Pour des puissances supérieures à 2 kW, ce procédé n'est plus suffisant pour assurer un fonctionnement régulier de l'ensemble optique.

La présente invention a pour objet de proposer un procédé de refroidissement de l'ensemble optique permettant d'utiliser un faisceau laser d'une puissance supérieure à 2 kW sans rencontrer les inconvénients précités.

Conformément à la présente invention, un procédé pour refroidir un ensemble optique comprenant au moins un premier élément, tel qu'une lentille, et au moins un second élément, tel qu'une lame transparente optiquement inactive, situé à faible distance d'au moins une face dudit premier élément, lesdits premier et second éléments étant exposés à un faisceau énergétiques, dans lequel on fait circuler un courant de gaz entre lesdits premier et second éléments, est caractérisé en ce que l'on fait circuler un courant de gaz également sur la face extérieure d'au moins un dèsdits seconds éléments.

Par l'expression "face extérieure", il faut entendre ici la face dudit second élément qui ne se trouve pas en regard dudit premier élément. De même, une "faible distance" signifie une distance inférieure à 1 mm, et de préférence comprise entre 0,01 mm et 0,5 mm.

Dans le cadre de la présente invention, les gaz circulant d'une part entre le premier et le second éléments de l'ensemble optique et d'autre part sur la face extérieure dudit second élément, sont généralement quelconques; ils peuvent donc être différents. Il est cependant avantageux d'utiliser pour ces deux courants gazeux le même gaz, qui peut être fourni par une source unique.

Egalement selon l'invention, il s'est encore avéré intéressant d'utiliser du gaz se trouvant à une température inférieure à la température ambiante; parmi les gaz utilisables, on peut notamment citer l'air, l'azote, l'hélium et l'argon, à une température comprise entre la température ambiante, c'est-à-dire + 20 °C, et - 80 °C. L'utilisation de gaz froid permet d'intensifier le refroidissement spécifique et par conséquent de réduire le débit de gaz.

Il est fréquent que la monture supportant lesdits premier et second éléments soit en aluminium et refroidie à l'eau. Pour éviter un bouchage du circuit de refroidissement de ce support par suite du gel de l'eau de circulation, on remplace cette eau par de l'air froid et sec ayant un bas point de rosée. Cet air froid peut être produit par tout moyen connu, par exemple dans un piège froid, avec injection d'air ou d'azote liquide.

Toujours selon l'invention, on fait d'abord circuler les courants de gaz dans ledit ensemble optique, et on établit le faisceau énergétique lorsque l'ensemble optique a atteint une température d'équilibre correspondant aux conditions de refroidissement, telles que la température et le débit du gaz de refroidissement.

On évite ainsi un gonflement de la lentille suivi d'un retour à sa forme et à ses dimensions initiales et on garantit dès lors la stabilité de fonctionnement de l'ensemble optique.

### Revendications

1. Procédé pour refroidir un ensemble optique comprenant au moins un premier élément, tel qu'une lentille, et au moins un second élément, tel qu'une lame transparente optiquement inactive, situé à faible distance d'au moins une face dudit premier élément, lesdits premier et second éléments étant exposés à un faisceau énergétique, dans lequel on fait circuler un courant de gaz entre lesdits premier et second éléments, caractérisé en ce que l'on fait circuler un courant de gaz également sur la face extérieure d'au moins un desdits seconds éléments.

2. Procédé suivant la revendication 1, caractérisé en ce que l'on utilise le même gaz pour les deux courants circulant respectivement entre lesdits premier et second éléments et sur la face extérieure dudit second élément.

3. Procédé suivant l'une ou l'autre des revendications 1 et 2, caractérisé en ce que lesdits gaz se trouvent à une température comprise entre la température ambiante, c'est-à-dire + 20 °C, et - 80 °C.

4. Procédé suivant l'une ou l'autre des revendications 1 à 3, caractérisé en ce que l'on fait d'abord circuler les courants de gaz dans ledit ensemble optique et en ce que l'on établit le faisceau énergétique lorsque l'ensemble optique a atteint une température d'équilibre correspondant aux conditions de refroidissement.

5. Procédé suivant l'une ou l'autre des revendications 1 à 4, caractérisé en ce que ledit faisceau énergétique est un faisceau laser.

6. Procédé suivant l'une ou l'autre des revendications 1 à 5, caractérisé en ce que ledit gaz est choisi parmi un groupe comprenant l'air, l'azote, l'argon, l'hélium et leurs mélanges.